# EUROPÄISCHE PATENTSCHRIFT

(11) **EP 2 887 424 B1**
(45) Veröffentlichungstag und Bekanntmachung des Hinweises auf die Patenterteilung: **25.09.2019**
(21) Anmeldenummer: 14195758.9
(22) Anmeldetag: 02.12.2014
(51) Int. Cl.: H01M 2/10, B60L 50/64, H01M 10/42

(54) **Traktionsbatterie mit Batteriemanagementsystem**
Traction battery with battery management system
Batterie de propulsion dotée d'un système de gestion de batterie

(30) Priorität: 23.12.2013 DE 102013114843
(43) Veröffentlichungstag der Anmeldung: 24.06.2015
(73) Patentinhaber: Linde Material Handling GmbH, 63743 Aschaffenburg (DE)
(72) Erfinder: Groh, Jonas, 63743 Aschaffenburg (DE)
(74) Vertreter: Patentship Patentanwaltsgesellschaft mbH

(56) Entgegenhaltungen:
- EP-A1- 0 662 725
- EP-A1- 1 686 637
- EP-A1- 2 650 251
- WO-A1-2013/051638
- DE-A1-102011 112 598
- DE-U1-202010 013 724
- US-A1- 2013 288 087

## Beschreibung

Die Erfindung betrifft eine Traktionsbatterie für eine batterie-elektrisch angetriebene mobile Arbeitsmaschine. Insbesondere betrifft die Erfindung eine Traktionsbatterie für eine batterie-elektrisch angetriebene mobile Arbeitsmaschine, etwa ein Flurförderzeug, die als Hochleistungsbatterie ausgebildet ist und einen Batterietrog aufweist, innerhalb dessen Module angeordnet sind, die jeweils aus mindestens einer Batteriezelle aufgebaut sind, und mit einem Batteriemanagementsystem, das Überwachungs- und Steuerungsvorrichtungen umfasst sowie ein System aus einer Traktionsbatterie und einer mobilen Arbeitsmaschine.

Für den Betrieb von batterie-elektrisch angetriebenen mobilen Arbeitsmaschinen, insbesondere Flurförderzeugen, wie etwa beispielsweise Gabelstaplern, kommen Traktionsbatterien zum Einsatz, die im Regelfall als austauschbare Batterien in ein Batteriefach eingesetzt werden können und, sobald Sie entladen sind, gegen eine aufgeladene Traktionsbatterie ersetzt werden können. Bisher sind solche Traktionsbatterien im Regelfall Blei-Säureakkumulatoren bzw. Blei-Säurebatterien, bei denen eine chemische Reaktion zwischen Schwefelsäure und Blei zur Speicherung der elektrischen Energie dient.

Durch neuere Technologien können inzwischen Batterien bzw. Akkumulatoren hergestellt werden und auch im industriellen Einsatz verwendet werden, die bessere Leistungsdaten bieten. Solche Batterien kann man als Hochleistungsbatterien bezeichnen, die sich dadurch auszeichnen, dass sie gegenüber einer Blei-Säurebatterie eine höhere Energiedichte in Bezug auf Gewicht und/oder Volumen aufweisen und eine andere Technik als eine Blei-Säure-Reaktion für die Energiespeicherung nutzen. Hinzu kommt bei vielen Hochleistungsbatterien als Merkmal, dass eine große Leistung beim Entladen abgegeben werden kann und/oder mit großer Leistung geladen werden kann. Die typischen Energiedichten in Bezug auf Gewicht und/oder Volumen liegen bei einer Hochleistungsbatterie dabei mindestens für einen der beiden Werte oberhalb und außerhalb der entsprechenden Kenngrößen für Blei-Säurebatterien.

Bereits Nickel-Cadmium Batterien weisen zwar keinen erheblichen Gewichtsvorteil auf, haben jedoch eine höhere Energiedichte in Bezug auf das Volumen. Weitere bekannte Technologien für Akkumulatoren bzw. wieder aufladbare Batterien unter Einsatz von Nickel sind beispielsweise Nickel-Metallhydrid, Nickel-Eisen, Nickel-Wasserstoff, Nickel-Zink und Silber-Zink. Daneben sind auch Natrium-Nickelchlorid und Natrium-Schwefel Akkumulatoren bekannt.

Zunehmend in größerem Umfang eingesetzt werden jedoch Lithium-Ionenbatterien, die eine in Serie anwendbare Zuverlässigkeit erreicht haben, sich durch hohe Energiedichte auszeichnen und nur einem geringen Memoryeffekt unterliegen sowie ein Entladen der Batterie bzw. Aufladen der Batterie mit großer Leistung ermöglichen. Bei der Lithium-Ionenbatterie sind ebenfalls unterschiedliche Technologien bekannt, wie beispielsweise Lithium-Polymer, Lithium-Kobaltdioxid, Lithium-Luft, Lithium-Titanat, Lithium-Eisenphosphat, Lithium-Mangan und Zinn-Schwefel-Lithiumionen.

Besonders vorteilhaft ist der Einsatz solcher Hochleistungsbatterien bei Fahrzeugen und beispielsweise Flurförderzeugen, da aufgrund der hohen Energiedichte in Bezug auf das Volumen bei dem vorgegebenen Bauraum für die Batterie eine größere Menge elektrische Energie gespeichert werden kann und somit die Reichweite eines Fahrzeugs bzw. die Einsatzdauer des Flurförderzeugs vergrößert werden kann.

Bei solchen Hochleistungsbatterien sind zusätzliche Sicherheitsmaßnahmen und Maßnahmen zur Regelung im Betrieb erforderlich. Es werden daher Überwachungs- und Steuerungsvorrichtungen vorgesehen, die unter dem Begriff Batteriemanagementsystem zusammengefasst werden. Dieses Batteriemanagementsystem überwacht den Zustand einzelner Batteriezellen bzw. Module, die aus einer oder mehrerer Batteriezellen bestehen, sowie steuert während des Ladens wie auch des Entladens der Hochleistungsbatterie die Funktionen der Batterie. Weitere Bestandteile des Batteriemanagementsystems neben Sensoren als Überwachungsvorrichtungen können dabei etwa Schaltvorrichtungen als Steuerungsvorrichtungen, wie etwa Schütze, und auch Sicherungen seien. Dabei wird das Batteriemanagementsystem mit der Hochleistungsbatterie zu einer Einheit integriert, in diese fest eingebaut und schützt insbesondere im Betrieb die Traktionsbatterie vor gefährlichen Betriebszuständen. Es können auch Bedienungseinheiten vorgesehen sein, mit denen ein Fahrer eines Flurförderzeugs direkt Funktionen der Traktionsbatterie betätigen kann, etwa einen Schütz zu schalten, um eine mit spannungsfrei geschalteten Leistungsanschlüssen im Ruhezustand befindliche Traktionsbatterie einzuschalten. Bei einem Fehlerfall müssen diese Komponenten des Batteriemanagementsystems ausgetauscht werden und es ist daher wünschenswert, dass diese möglichst leicht erreichbar sind, ebenso wie eventuelle direkte Bedienfunktionen.

Im Regelfall ist es nicht technisch sinnvoll, innerhalb einer Traktionsbatterie unterschiedliche Batteriezellen oder Module einzusetzen. Bei einer Traktionsbatterie mit Modulen, die alle gleiche äußere Abmessungen aufweisen, bestehen dadurch Beschränkungen in der Anzahl der Module, die innerhalb der genormten Größen unterliegenden Batterietröge untergebracht werden können. Die Module werden in dem Batterietrog angeordnet und sind parallel und/oder in Reihe geschaltet, um eine gewünschte Kapazität und/oder Spannung der Traktionsbatterie zu erreichen. Es können sich insbesondere Freiräume bilden, wenn die Module dicht gepackt werden und in einer oder beiden Längserstreckung innerhalb des Batterietrogs mit den vorgegebenen Modulmaßen eine kompakte Auffüllung nicht möglich ist.

Die DE 20 2010 013 724 U1 offenbart ein Batteriepack für ein Flurförderzeug als Lithiumionen-Batterie mit einem integrierten Batteriesteuerungssystem, das an einer Seitenwand angeordnet ist, wobei das innere des Batteriepacks, wie auch das Batteriesteuerungssystem über eine Öffnung zugänglich sind, die durch einen Deckel über die ganze Querschnittsfläche des Batteriepacks verschlossen wird.

Die EP 0 662 725 A1 offenbart eine Anordnung aus Bleibatterien mit einem seitlich in einem eigenen Fach angeordneten Ladegerät, wobei ein Anschlusskabel der Bleibatterien durch eine Öffnung in das Ladegerät gesteckt werden kann und über die Öffnung auch Steuerungselemente des Ladegerätes zugänglich sind.

Die WO 2013/051638 A1 bzw. EP 2 749 444 A1 offenbart ein an einer Fahrzeugkarosserie montiertes Batteriepack. Eine Vielzahl von Zellen bildet ein Batteriemodul, und mehrere Batteriemodule sind zu dem Batteriepack aufeinander geschichtet. Ein Service-Stecker ist in einer Öffnung einer Seitenfläche des Batteriepacks und ein Batteriecontroller ist in einem Controller-Aufnahmeabschnitt angeordnet.

Die EP 1 686 637 A1 offenbart eine Anordnung von mehreren elektrischen Energiespeichern eines Kraftfahrzeugs. Die Anordnung umfasst einen von außen zugänglichen Batterietrennschalter.

Der vorliegenden Erfindung liegt die Aufgabe zu Grunde, eine Traktionsbatterie als Hochleistungsbatterie zur Verfügung zu stellen, bei der eine gute Zugänglichkeit des Batteriemanagementsystems gegeben ist.

Diese Aufgabe wird durch eine Traktionsbatterie mit den Merkmalen des unabhängigen Patentanspruchs 1 sowie ein System aus einer Traktionsbatterie und einer mobilen Arbeitsmaschine nach Anspruch 11 gelöst. Vorteilhafte Weiterbildungen der Erfindung sind in den Unteransprüchen angegeben.

Die Aufgabe wird erfindungsgemäß dadurch gelöst, dass bei einer Traktionsbatterie für eine batterie-elektrisch angetriebene mobile Arbeitsmaschine, insbesondere ein Flurförderzeug, beispielsweise Gegengewichtsgabelstapler, die als Hochleistungsbatterie ausgebildet ist und einen Batterietrog aufweist, innerhalb dessen Module angeordnet sind, die jeweils aus mindestens einer Batteriezelle aufgebaut sind, und mit einem Batteriemanagementsystem, das Überwachungs- und Steuerungsvorrichtungen umfasst, wobei Elektronikkomponenten und Bedienelemente des Batteriemanagementsystem, die nicht in die Module integriert sind, anliegend an eine Seitenwand des Batterietrogs angeordnet sind und über mindestens eine Öffnung der Seitenwand zugänglich sind, um einen Austausch der Elektronikkomponenten des Batteriemanagementsystems im Fehlerfall zu ermöglichen.

Erfindungsgemäss wird über diese Öffnung in der Seitenwand auf die Elektronikkomponenten des Batteriemanagementsystems zugegriffen. Dies ermöglicht im Fehlerfall einen leichten Austausch oder eine Reparatur. Auch wird es möglich, regelmäßig erforderliche Wartungs- und Überprüfungsarbeiten einfacher vorzunehmen. Weiterhin ist es auch denkbar, dass hinter einer solchen Öffnung, eventuell in einer entsprechend geformten Ausbuchtung, Bedienungsfunktionen der Traktionsbatterie vorgesehen sind. Insbesondere bei Hochleistungsbatterien, die etwa im Grundzustand spannungslos geschaltet sind, kann es beispielsweise erforderlich sein, das ein Hauptschütz als Hauptschalter zunächst eingeschaltet werden muss, wenn eine solche Traktionsbatterie nach einem Batteriewechsel in Betrieb genommen wird. Die Module enthalten zum Teil bereits Sensoren und/oder Steuerungskomponenten, die in diese integriert sind. Soweit jedoch Elektronikkomponenten des Batteriemanagementsystems nicht in die Module integriert sind, sondern zusammengefasst für die gesamte Traktionsbatterie wirken, so werden diese vorteilhaft anliegend auf der Innenseite mindestens einer Seitenwand des Batterietrog zusammengefasst. Dabei kann der erforderliche Platz dadurch gebildet werden, dass eines oder mehrere der Module entfallen, aber auch dadurch, dass in der entsprechenden Längserstreckung des Batterietrogs aufgrund der Maße der Module eine vollständige Auffüllung des Platzes mit Modulen nicht möglich ist. Wenn dann die Module im Wesentlichen, bis auf eventuell erforderliche Mindestabstände, dicht gepackt werden, so können diese von der einen Seitenwand weg gerückt und in dem sich ergebenden Freiraum die Elektronikkomponenten des Batteriemanagementsystems angeordnet werden.

Die mindestens eine Öffnung der Seitenwand kann durch einen Deckel verschließbar sein.

Dies ermöglicht einen Schutz gegenüber Feuchtigkeit und Beschädigungen. Ein entsprechender Deckel ist daher vorteilhaft eventuell auch mit einer Dichtung versehen. Weiterhin ist es möglich, einen Deckel sowohl mit durch Werkzeug lösbaren Verschlusselementen, wie Schrauben zu versehen, aber auch so auszuführen, dass dieser leicht von Hand und/oder werkzeuglos zu öffnen ist.

Vorteilhaft sind durch die Öffnung Bedienelemente des Batteriemanagementsystems zugänglich, insbesondere ein Hauptschalter oder Wartungsfunktionen.

Für die Bedienelemente des Batteriemanagementsystems kann eine eigene Öffnung vorgesehen ist.

Insbesondere kann eine solche eigene Öffnung als eine nicht verschlossene ausgeführt sein. Dabei ist es möglich, dass hinter der Seitenwand eine Ausnehmung gebildet ist, die gegenüber dem übrigen Batterietrog abgeschlossen ist, und in der die Bedienelemente angeordnet sind. Dies ergibt einen guten Schutz gegenüber mechanischen Beschädigungen, da die Bedienelemente in dieser Ausnehmung nicht über die Außenkontur des Batterietrogs hinaus stehen.

Die Elektronikkomponenten und Bedienelemente des Batteriemanagementsystems können in einem sich bei dichter Packung der Module aufgrund der Maße der Module im Verhältnis zur Batterietroglänge in einer Richtung ergebenden Freiraum angeordnet sein.

Wie bereits oben geschildert, kann dadurch vorteilhaft ein sich zwangsläufig ergebender Freiraum für die Elektronikkomponenten des Batteriemanagementsystems genutzt werden und zugleich eine Zugänglichkeit dieser Elektronikkomponenten über die Öffnung der Seitenwand erreicht werden.

Vorteilhaft sind die Module mit dünnen Abstandselementen dicht gepackt.

Gegebenenfalls müssen die Module untereinander Mindestabstände einhalten. Dies kann durch dünne Abstandselemente sichergestellt werden. Alternativ können die Module sich berührend, insbesondere direkt berührend, gepackt werden.

In einer weiteren Ausführungsform sind die Elektronikkomponenten des Batteriemanagementsystems, die nicht in die Module integriert sind, anliegend an zwei über Eck verbundenen Seitenwänden des Batterietrogs angeordnet und über mindestens eine Öffnung der jeweiligen Seitenwand zugänglich.

Soweit die Abmessungen der Module jeweils in der Längserstreckung der Maße des Batterietrogs nicht ganzzahlig hinein passen, ergeben sich maximal an zwei Seitenwänden, die über Eck verbunden sind, Freiräume die vorteilhaft für Elektronikkomponenten des Batteriemanagementsystem genutzt werden können.

Vorteilhaft ist der Batterietrog auf seiner Oberseite mit einem Deckel abgeschlossen.

Ein geschlossenes Batteriegehäuse ist bei einer Hochleistungsbatterie vorteilhaft, da im Gegensatz zu einer Blei-Säurebatterie durch das Batteriemanagementsystem auch Elektronik und empfindlichere Bauteile und Komponenten in der Traktionsbatterie enthalten sind, die durch ein geschlossenes Gehäuse besser geschützt werden und mit größerer Zuverlässigkeit funktionieren und nicht die Notwendigkeit einer Überprüfung bzw. Nachfüllung eines Elektrolyts der Blei-Säurezellen besteht.

Vorteilhaft ist die Hochleistungsbatterie eine Lithium-Ionenbatterie.

In einer günstigen Ausführungsform entspricht die mindestens eine Seitenwand derjenigen, die bei einer Positionierung der Traktionsbatterie in einer mobilen Arbeitsmaschine einer seitlichen Zugangsöffnung eines Batteriefachs der Arbeitsmaschine zugewandt ist, die insbesondere einer kurzen Seitenwand bei einer nicht quadratischen Grundfläche der Traktionsbatterie entspricht.

Die Aufgabe wird auch gelöst durch ein System aus einer mobilen Arbeitsmaschine, insbesondere ein Flurförderzeug, beispielsweise ein Gabelstapler, die batterie-elektrisch angetrieben wird und ein Batteriefach für eine Traktionsbatterie mit einer seitlichen Zugangsöffnung aufweist sowie mit einer Traktionsbatterie wie zuvor beschrieben
Indem bei einer Traktionsbatterie diejenige Seitenwand genutzt wird, die in der Position in einem Batteriefach der mobilen Arbeitsmaschine bzw. eines Flurförderzeugs, beispielsweise eines Gabelstaplers, an einer seitlichen Zugangsöffnung des Batteriefachs zu liegen kommt, kann eine Wartung und Bedienung der Batterie der Traktionsbatterie erfolgen, auch wenn diese in dem Batteriefach eingesetzt ist. Es muss lediglich gegebenenfalls eine Zugangstür oder eine Zugangsklappe zu dem Batteriefach geöffnet werden. In der größeren Zahl der Fälle ist dies bei einer Traktionsbatterie mit nicht quadratischer Grundfläche die kurze Seite.

Weitere Vorteile und Einzelheiten der Erfindung werden anhand der in den schematischen Figuren dargestellten Ausführungsbeispiele näher erläutert. Hierbei zeigt
- Fig. 1: eine erfindungsgemäße Traktionsbatterie in Perspektivansicht und
- Fig. 2: die Traktionsbatterie der Fig. 1 in Aufsicht ohne oberen Deckel.

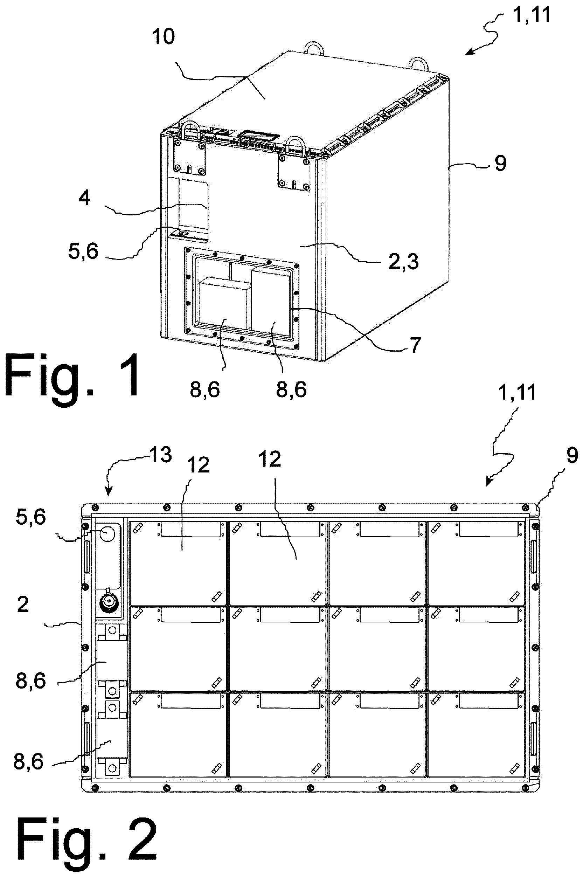

Die Fig. 1 zeigt eine erfindungsgemäße Traktionsbatterie 1 in Perspektivansicht. An einer Seitenwand 2, die bei dieser Traktionsbatterie 1 mit nicht quadratischer Grundfläche eines Batterietrogs 9 einer kurzen Seitenwand 3 entspricht, befindet sich eine erste Öffnung 4, die über die ein Bedienelement 5 des Batteriemanagementsystems 6 zugänglich ist. Über eine zweite Öffnung 7, die über einen hier abgenommenen Deckel verschließbar ist, sind weitere Elektronikkomponenten 8 des Batteriemanagementsystems 6 zugänglich und können im Fehlerfall ausgetauscht werden. Ein oberer Deckel 10 verschließt den Batterietrog 9, so dass sich ein geschlossenes Gehäuse der Traktionsbatterie 1 ergibt, in dem alle Elektronikkomponenten 8 einer Hochleistungsbatterie 11 witterungsgeschützt enthalten sind.

Die Fig. 2 zeigt die Traktionsbatterie 1 der Fig. 1 in Aufsicht ohne oberen Deckel 10. Module 12 der Hochleistungsbatterie 11 sind dicht aufeinander gepackt und so innerhalb des Batterietrogs 9 angeordnet, dass ein aufgrund der Maße der Module 12 und der Abmessungen des Batterietrogs 9 sich ergebender Freiraum 13 innerhalb des Batterietrogs 9 für die Elektronikkomponenten 8 sowie Bedienelementen 5 des Batteriemanagementsystem 6 anliegend an die Seitenwand 2 genutzt werden kann.

## Patentansprüche

1. Traktionsbatterie (1) für eine batterie-elektrisch angetriebene mobile Arbeitsmaschine, insbesondere ein Flurförderzeug, die als Hochleistungsbatterie (11) ausgebildet ist und einen Batterietrog (9) aufweist, innerhalb dessen Module (12) angeordnet sind, die jeweils aus mindestens einer Batteriezelle aufgebaut sind, und mit einem Batteriemanagementsystem (6), das Überwachungs- und Steuerungsvorrichtungen umfasst,
**dadurch gekennzeichnet,**
**dass** Elektronikkomponenten (8) und Bedienelemente (5) des Batteriemanagementsystems (6), die nicht in die Module (12) integriert sind, anliegend an eine Seitenwand (2,3) des Batterietrogs (9) angeordnet sind und über mindestens eine Öffnung (4,7) der Seitenwand (2,3) zugänglich sind, um einen Austausch der Elektronikkomponenten (8) des Batteriemanagementsystems (6) im Fehlerfall zu ermöglichen.

2. Traktionsbatterie nach Anspruch 1,
**dadurch gekennzeichnet,**
**dass** die mindestens eine Öffnung (7) der Seitenwand durch einen Deckel verschließbar ist.

3. Traktionsbatterie nach Anspruch 1 oder 2,
**dadurch gekennzeichnet,**
**dass** durch die Öffnung (4) Bedienelemente (5) des Batteriemanagementsystem (6) zugänglich sind, insbesondere ein Hauptschalter oder Wartungsfunktionen.

4. Traktionsbatterie nach Anspruch 3,
**dadurch gekennzeichnet,**
**dass** für die Bedienelemente (5) des Batteriemanagementsystems (6) eine eigene Öffnung (4) vorgesehen ist.

5. Traktionsbatterie nach einem der Ansprüche 1 bis 4,
**dadurch gekennzeichnet,**
**dass** die Elektronikkomponenten (8) und die Bedienelemente (5) des Batteriemanagementsystems (6) in einem sich bei dichter Packung der Module (12) aufgrund der Maße der Module (12) im Verhältnis zur Batterietroglänge in einer Richtung ergebenden Freiraum (13) angeordnet sind.

6. Traktionsbatterie nach Anspruch 5,
**dadurch gekennzeichnet,**
**dass** die Module (12) mit dünnen Abstandselementen dicht gepackt sind.

7. Traktionsbatterie nach einem der Ansprüche 1 bis 6,
**dadurch gekennzeichnet,**
**dass** die Elektronikkomponenten (8) und die Bedienelemente (5) des Batteriemanagementsystems (6), die nicht in die Module (12) integriert sind, anliegend an zwei über Eck verbundenen Seitenwänden (2,3) des Batterietrogs (9) angeordnet sind und über mindestens eine Öffnung (4,7) der jeweiligen Seitenwand (2,3) zugänglich sind.

8. Traktionsbatterie nach einem der Ansprüche 1 bis 7,
**dadurch gekennzeichnet,**
**dass** der Batterietrog (9) auf seiner Oberseite mit einem Deckel (10) abgeschlossen ist.

9. Traktionsbatterie nach einem der Ansprüche 1 bis 8,
**dadurch gekennzeichnet,**
**dass** die Hochleistungsbatterie (11) eine Lithium-Ionenbatterie ist.

10. Traktionsbatterie nach einem der Ansprüche 1 bis 9,
**dadurch gekennzeichnet,**
**dass** die mindestens eine Seitenwand (2,3) derjenigen entspricht, die bei einer Positionierung der Traktionsbatterie (1) in einer mobilen Arbeitsmaschine einer seitlichen Zugangsöffnung eines Batteriefachs zugewandt ist, die insbesondere einer kurzen Seitenwand bei einer nicht quadratischen Grundfläche der Traktionsbatterie (1) entspricht.

11. System aus einer mobilen Arbeitsmaschine, insbesondere ein Flurförderzeug, die batterie-elektrisch angetrieben wird und ein Batteriefach für eine Traktionsbatterie (1) mit einer seitlichen Zugangsöffnung aufweist sowie mit einer Traktionsbatterie (1) nach Anspruch 10.

## Claims

1. Traction battery (1) for a battery-electric powered mobile working machine, in particular an industrial truck, which traction battery is configured as a high-power battery (11) and has a battery tray (9) within which modules (12) which are each constructed from at least one battery cell are arranged, and having a battery management system (6) which comprises monitoring and control apparatuses,
**characterized**
**in that** the electronics components (8) and operator control elements (5) of the battery management system (6), which are not integrated into the modules (12), are arranged so as to bear against a side wall (2, 3) of the battery tray (9) and are accessible via at least one opening (4, 7) of the side wall (2, 3) in order to allow the electronics components (8) of the battery management system (6) to be replaced in the event of a fault.

2. Traction battery according to Claim 1,
**characterized**
**in that** the at least one opening (7) of the side wall can be closed by a cover.

3. Traction battery according to Claim 1 or 2,
**characterized**
**in that** operator control elements (5) of the battery management system (6), in particular a main switch or service functions, are accessible through the opening (4) .

4. Traction battery according to Claim 3,
**characterized**
**in that** a dedicated opening (4) is provided for the operator control elements (5) of the battery management system (6).

5. Traction battery according to one of Claims 1 to 4,
**characterized**
**in that** the electronics components (8) and the operator control elements (5) of the battery management system (6) are arranged in a clearance (13) which is produced in the case of dense packing of the modules (12) on account of the dimensions of the modules (12) in relation to the battery tray length in one direction.

6. Traction battery according to Claim 5,
**characterized**
**in that** the modules (12) are densely packed with thin spacer elements.

7. Traction battery according to one of Claims 1 to 6,
**characterized**
**in that** the electronics components (8) and the operator control elements (5) of the battery management system (6), which are not integrated into the modules (12), are arranged so as to bear against two side walls (2, 3) of the battery tab (9), which side walls are connected across a corner, and are accessible via at least one opening (4, 7) of the respective side wall (2, 3).

8. Traction battery according to one of Claims 1 to 7,
**characterized**
**in that** the battery tray (9) is closed off by a cover (10) at its top side.

9. Traction battery according to one of Claims 1 to 8,
**characterized**
**in that** the high-power battery (11) is a lithium-ion battery.

10. Traction battery according to one of Claims 1 to 9,
**characterized**
**in that** the at least one side wall (2, 3) corresponds to that side wall which, when positioning the traction battery (1) in a mobile working machine, faces a lateral access opening of a battery compartment which corresponds, in particular, to a short side wall given a non-square base area of the traction battery (1).

11. System comprising a mobile working machine, in particular an industrial truck, which is battery-electric powered and has a battery compartment for a traction battery (1) with a lateral access opening, and also having a traction battery (1) according to Claim 10.

## Revendications

1. Batterie de traction (1) destiné à une machine de travail mobile alimentée électriquement par batterie, notamment un chariot de manutention, laquelle batterie est conçue comme une batterie à haute performance (11) et comporte un bac de batterie (9), dans lequel sont disposés des modules (12) qui sont chacun constitués d'au moins un élément de batterie, et comprend un système de gestion de batterie (6) pourvu de dispositifs de surveillance et de commande,
**caractérisée en ce que**
des composants électroniques (8) et des éléments de commande (5) du système de gestion de batterie (6), qui ne sont pas intégrés dans les modules (12), sont disposés de manière adjacente à une paroi latérale (2, 3) du bac de batterie (9) et sont accessibles par au moins une ouverture (4, 7) de la paroi latérale (2, 3) pour permettre le remplacement des composants électroniques (8) du système de gestion de batterie (6) en cas de panne.

2. Batterie de traction selon la revendication 1,
**caractérisée en ce que**
au moins une ouverture (7) de la paroi latérale peut être fermée par un couvercle.

3. Batterie de traction selon la revendication 1 ou 2,
**caractérisée en ce que**
des éléments de commande (5) du système de gestion de batterie (6), notamment un commutateur principal ou des fonctions de maintenance, sont accessibles par l'ouverture (4).

4. Batterie de traction selon la revendication 3,
**caractérisée en ce que**
une ouverture séparée (4) est prévue pour les éléments de commande (5) du système de gestion de batterie (6).

5. Batterie de traction selon l'une des revendications 1 à 4,
**caractérisée en ce que**
les composants électroniques (8) et les éléments de commande (5) du système de gestion de batterie (6) sont disposés dans un espace libre (13) obtenu lors d'un emballage compact des modules (12) en raison des dimensions des modules (12) par rapport à la longueur du bac de batterie.

6. Batterie de traction selon la revendication 5,
**caractérisée en ce que**
les modules (12) sont emballés de manière compacte avec des éléments d'écartement minces.

7. Batterie de traction selon l'une des revendications 1 à 6,
**caractérisée en ce que**
les composants électroniques (8) et les éléments de commande (5) du système de gestion de batterie (6), qui ne sont pas intégrés aux modules (12), sont disposés de manière adjacente à deux parois latérale (2, 3), reliées par coin, du bac de batterie (9) et sont accessibles par au moins une ouverture (4, 7) de la paroi latérale (2, 3) correspondante.

8. Batterie de traction selon l'une des revendications 1 à 7,
**caractérisée en ce que**
le bac de batterie (9) est fermé sur son côté supérieur par un couvercle (10).

9. Batterie de traction selon l'une des revendications 1 à 8,
**caractérisée en ce que**
la batterie à haute performance (11) est une batterie à ions lithium.

10. Batterie de traction selon l'une des revendications 1 à 9,
**caractérisée en ce que**
l'au moins une paroi latérale (2, 3) correspond à celle qui, lorsque la batterie de traction (1) est positionnée dans une machine de travail mobile, fait face à une ouverture d'accès latérale d'un compartiment de batterie qui correspond notamment à une courte paroi latérale lorsque la batterie de traction (1) a une base non carrée.

11. Système formé d'une machine de travail mobile, en particulier un chariot de manutention, qui est entraîné électriquement par batterie et qui comporte un compartiment de batterie, destiné à une batterie de traction (1), qui est pourvu d'une ouverture d'accès latérale et qui comporte une batterie de traction (1) selon la revendication 10.
